# EUROPÄISCHE PATENTSCHRIFT

(11) **EP 3 408 578 B1**
(45) Veröffentlichungstag und Bekanntmachung des Hinweises auf die Patenterteilung: **25.03.2020**
(21) Anmeldenummer: 17702078.1
(22) Anmeldetag: 27.01.2017
(51) Int. Cl.: F16M 3/00, F16M 7/00, B65D 81/05

(54) **MONTAGEVORRICHTUNG FÜR GROSSRAUMBEHÄLTER, GROSSRAUMBEHÄLTER MIT EINER DERARTIGEN MONTAGEVORRICHTUNG UND TRANSPORTCONTAINER**
ASSEMBLY DEVICE FOR LARGE CONTAINERS, LARGE CONTAINERS COMPRISING SUCH AN ASSEMBLY DEVICE, AND TRANSPORT CONTAINER
DISPOSITIF DE MONTAGE POUR CONTENEUR À GRAND VOLUME, CONTENEUR À GRAND VOLUME ÉQUIPÉ D'UN TEL DISPOSITIF DE MONTAGE, ET CONTENEUR DE TRANSPORT

(30) Priorität: 27.01.2016 DE 102016101419
(43) Veröffentlichungstag der Anmeldung: 05.12.2018
(73) Patentinhaber: FM Floc GmbH, 61348 Bad Homburg v.d. Höhe (DE)
(72) Erfinder: KNAUER, Jochen, 61348 Bad Homburg v.d. Höhe (DE)
(74) Vertreter: Schröer, Gernot H.
(86) Internationale Anmeldenummer: PCT/EP2017/051798
(87) Internationale Veröffentlichungsnummer: WO 2017/129760

(56) Entgegenhaltungen:
- GB-A- 2 226 302
- US-A1- 2010 060 093

## Beschreibung

Die Erfindung betrifft eine Montagevorrichtung für Großraumbehälter, einen Großraumbehälter mit einer solchen Montagevorrichtung sowie eine mobile technische Anlage.

In vielen Industriebereichen ist es teilweise erforderlich, Großgeräte und -anlagen an unterschiedlichen Einsatzorten zu betreiben, was erfordert, dass die jeweiligen Geräte oder Anlagen mobil ausgebildet sind, so dass sie je nach Bedarf an unterschiedliche Einsatzorte verbracht werden können. Hierbei ist entscheidend, dass die mobilen Geräte und Anlagen insbesondere ausreichend gegen die beim Transport von Ort zu Ort auftretenden Einwirkungen gesichert und geschützt sind, und vergleichsweise einfach transportiert werden können, wobei es wünschenswert ist, dass der zur Umrüstung der Großgeräte- und - anlagen für mobile Einsätze erforderliche Aufwand, insbesondere in konstruktiver und/oder finanzieller Hinsicht, vergleichsweise gering gehalten werden kann.

Die GB 2 226 302 A betrifft einen Behälter, der dazu eingerichtet ist, in einem Fahrzeugabteil aufgenommen zu werden. Der Behälter umfasst ein durch vier Seitenwände und einen Boden abgegrenztes, nach oben offenes Aufnahmevolumen, das dazu ausgebildet ist, unterschiedliche Waren oder Sachen, z.B. zerbrechliche Waren oder Waren unterschiedlicher Größe, aufzunehmen. An jeder Außenseite der Seitenwände ist ein klappbarer, in der Länge veränderbarer Befestigungsarm montiert. Der Befestigungsarm springt im ausgeklappten Zustand senkrecht zur jeweiligen Seitenwand nach außen vor, so dass der Behälter mit ausgeklappten Befestigungsarmen an den Innenwänden des Fahrzeugabteils abgestützt werden kann.

Ausgehend davon ist es eine Aufgabe der Erfindung, eine Möglichkeit bereitzustellen, mit der Geräte und Anlagen, insbesondere technische Großgeräte und -anlagen, für mobile Einsatzzwecke, insbesondere in finanzieller und/oder konstruktiver Hinsicht, vergleichsweise einfach umgerüstet werden können, und mit der die Geräte und Anlagen optional vor transportbedingten Einwirkungen und/oder an verschiedenen Betriebsorten auftretenden externen Einwirkungen in ausreichendem Maße geschützt werden können.

Diese Aufgabe wird erfindungsgemäß gelöst durch die Merkmale der Unabhängigen Ansprüche. Weitere erfindungsgemäße Ausgestaltungen ergeben sich insbesondere aus den abhängigen Ansprüchen sowie aus der nachfolgenden Beschreibung.

Die hierin beschriebenen Merkmale und Merkmalskombinationen gemäß der zu Grunde liegenden Erfindung sind nicht durch die in den Patentansprüchen gewählte(n) Merkmalskombination(en) und die gewählten Rückbeziehungen beschränkt. Jedes Merkmal einer Anspruchskategorie, beispielsweise einer Vorrichtung, kann beispielsweise auch in einer anderen Anspruchskategorie, beispielsweise einem Verfahren beansprucht werden. Ferner kann jedes Merkmal in den Patentansprüchen, auch unabhängig von der jeweiligen patentanspruchsgemäßen Rückbeziehung, beispielsweise in einer beliebigen Kombination mit einem oder mehreren anderen Merkmal(en) der Patentansprüche oder der nachfolgenden Beschreibung beansprucht werden. Ferner kann jedes Merkmal, das in der nachfolgenden Beschreibung und/oder den anhängenden Zeichnungen beschrieben oder offenbart ist, für sich, unabhängig oder losgelöst von dem Zusammenhang, in dem es steht, allein oder in jeglicher Kombination mit einem oder mehreren anderen Merkmalen, das oder die in den Patentansprüchen, der Beschreibung und/oder in den Zeichnungen beschrieben oder offenbart ist oder sind, beansprucht werden.

Eine Ausgestaltung der Erfindung gemäß Patentanspruch 1 betrifft eine Montagevorrichtung zur Montage einer technischen Anlage, insbesondere eines Großgeräts oder einer Großanlage, beispielsweise einer Anlage zur Flokkulation von Flüssig-Feststoff-Gemischen wie Schlamm und dgl. bzw. einer Anlage zur Vermengung eines Flüssig-Feststoff-Gemisches mit einem Flokkulationsagens, in einem mobilen Großraumbehälter. Bei dem Großraumbehälter kann es sich beispielsweise um einen Transportbehälter, insbesondere einen Standardcontainer bzw. ISO-Container, handeln.

Die Montagevorrichtung umfasst gemäß der Ausgestaltung nach Patentanspruch 1 einen zur Befestigung der Anlage ausgebildeten Tragrahmen mit einer daran ausgebildeten und damit mechanisch gekoppelten Abstützeinrichtung.

Der Tragrahmen kann mehrere Längs- und Querstreben umfassen, und eine oder mehrere zur Befestigung und Montage der Anlage vorgesehene Montageplattformen, beispielswiese in Form von Montagegerüsten und dgl. Der Tragrahmen kann beispielsweise einen aus Profilstahl aufgebauten Gitterrahmen umfassen.

Die Abstützeinrichtung kann gemäß der Ausgestaltung nach Anspruch 1 zumindest zwei Stützeinheiten umfassen. Jede der Stützeinheiten kann zumindest einen zur Abstützung bzw. zum Anschlagen gegen eine Innenwandung des Großraumbehälters eingerichteten und relativ zum Tragrahmen mittels einer Stelleinheit längs einer jeweiligen Wirklinie bewegbaren Stützkopf aufweisen.

Gemäß der Ausgestaltung nach Anspruch 1 können die Stützköpfe derart ausgerichtet oder ausrichtbar angebracht sein, dass die Stützköpfe der beiden Stützeinheiten voneinander verschiedene, beispielsweise quer, oder insbesondere senkrecht, zueinander verlaufende Wirklinien aufweisen. Die Wirklinien können beispielsweise eine stumpfen oder spitzen Winkel einschließen, oder aber zueinander senkrecht stehen.

Mit den zumindest zwei verschiedenen Wirklinien, quer, insbesondere senkrecht, zueinander verlaufen können, ist eine in zwei Dimensionen wirkende Abstützung des Tragrahmens im Inneren des mobilen Großraumbehälters möglich, wodurch eine vergleichsweise zuverlässige und konstruktiv vergleichsweise einfache mechanische Sicherung der Anlage im inneren des mobilen Großraumbehälters gegenüber beispielsweise beim Transport üblicherweise auftretenden Einwirkungen möglich ist.

In Ausgestaltungen kann vorgesehen sein, dass die Stützeinheiten, die Stelleinheit und/oder die Stützköpfe Dämpfungselemente aufweisen, welche derart ausgebildet sind, dass in Richtung der Wirklinie, beispielsweise während des Transports des mobilen Großraumbehälters, auftretende Stoßbelastungen zumindest teilweise kompensiert oder aufgefangen werden können. Die Dämpfungselemente können beispielsweise als Feder- und/oder Gummipuffer ausgebildet sein, wobei beispielsweise der Stützkopf aus einem elastischen Material, insbesondere Gummimaterial hergestellt sein kann, oder ein solches aufweisen kann, so dass der Stützkopf bei Anlage an die jeweilige Innenwandung des Großraumbehälters als Dämpfer fungieren kann.

In Ausgestaltungen kann vorgesehen sein, dass zumindest eine der beiden Stützeinheiten zumindest einen zur Abstützung an einer Innenwandung des Großraumbehälters eingerichteten weiteren Stützkopf aufweist. Der weitere Stützkopf kann in bevorzugten Ausführungen entgegengesetzt zum Stützkopf der Stützeinheit ausgerichtet bzw. orientiert sein. In Varianten kann vorgesehen sein, dass der Stützkopf und der weitere Stützkopf an gegenüberliegenden Seiten des Tragrahmens angeordnet sind. Der weitere Stützkopf kann starr, oder ebenfalls wie der Stützkopf beweglich angebracht sein.

In Ausgestaltungen kann ein einem Stützkopf zugeordneter weiterer Stützkopf mit der für den Stützkopf ohnehin bereits vorhandenen Stelleinheit gekoppelt sein, oder der weitere Stützkopf kann mit einer weiteren, insbesondere separaten, Stelleinheit gekoppelt sein, derart, dass der weitere Stützkopf längs einer jeweiligen weiteren Wirklinie bewegbar ist. In Varianten kann vorgesehen sein, dass der Stützkopf und der weitere Stützkopf derart angeordnet und eingerichtet sind, dass die weitere Wirklinie des weiteren Stützkopfs parallel zur Wirklinie des Stützkopfs der Stützeinheit ist. In weiteren Varianten kann vorgesehen sein, dass die Wirklinien, d.h. weitere Wirklinie des weiteren Stützkopfs und die Wirklinie des Stützkopfs kollinear zueinander sind. Insbesondere mit kollinear zueinander verlaufenden Wirklinien ist eine Fixierung des Tragrahmens bezüglich zweier einander zugewandter Innenwandungen möglich.

In Ausgestaltungen der Montagevorrichtung, bei welchen zumindest ein weiterer Stützkopf vorhanden ist, kann optional vorgesehen sein, dass jedem weiteren Stützkopf genau einer der Stützköpfe zugeordnet ist. Bevorzugt verlaufen deren Wirklinien kollinear zueinander. In Varianten kann vorgesehen sein, dass einem weiteren Stützkopf mehrere der Stützkopfe zugeordnet sind, bzw. dass einem Stützkopf mehrere weitere Stützkopfe zugeordnet sind.

Die Anzahl an Stützköpfen und ggf. weiteren Stützköpfen kann je nach jeweils gegebenen Anforderungen an die Abstützung und/oder Beschaffenheit der jeweiligen Innenwandung/en gewählt werden.

In Ausgestaltungen kann vorgesehen sein, dass der Stützkopf, optional auch der weitere Stützkopf, eine scheibenartige, insbesondere kreisscheibenartige, Form aufweist. Der Stützkopf und weitere Stützkopf können insbesondere gleich aufgebaut sein, und im Hinblick auf deren Geometrie beispielsweise kongruent zueinander ausgebildet sind.

In Ausgestaltungen der Montagevorrichtung kann vorgesehen sein, dass zumindest ein Stützkopf und optional zumindest ein weiterer Stützkopf, eine zur Anlage an die jeweilige Innenwandung des Großraumbehälters ausgebildete Stützfläche umfasst/en. Die Stützfläche kann beispielsweise konvex oder konkav gekrümmt und/oder senkrecht zur jeweiligen Wirklinie ausgerichtet sein, und senkrecht zur jeweiligen Wirklinie z.B. einen kreisförmigen Querschnitt aufweisen. Die Form und/oder Kontur der Stützköpfe kann angepasst sein an die Form bzw. Kontur der jeweiligen Innenwandung bzw. Stelle der Innenwandung an welcher der jeweilige Stützkopf im montierten Zustand anliegt oder angeschlagen ist. Der Stützkopf bzw. die Stützfläche und die jeweils zugeordnete Anlagestelle oder -fläche der Innenwandung können beispielsweise zueinander komplementäre Geometrien aufweisen.

In Ausgestaltungen kann vorgesehen sein, dass die bzw. eine am Stützkopf vorhandene oder ausgebildete Stützfläche parallel zu einer Normalenebene der jeweiligen Wirklinie bzw. weiteren Wirklinie ist. Beispielsweise können die Stützflächen derart ausgebildet sein, und die Stützköpfe können derart angebracht und angeordnet sein, dass die Stützflächen des Stützkopfs und des weiteren Stützkopfs voneinander abgewandt an gegenüberliegenden Seiten des Tragrahmens gelegen sind.

In Ausgestaltungen kann vorgesehen sein, dass der Stützkopf, und, sofern vorhanden, der weitere Stützkopf, insbesondere deren Stützflächen, über die Außenkontur oder Mantelfläche des Tragrahmens hinausragen. Beispielsweise kann/können der Stützkopf und/oder der weitere Stützkopf, insbesondere deren Stützflächen, so angeordnet sein, dass diese außerhalb der Mantelfläche angeordnet bzw. gelegen ist/sind.

In Ausgestaltungen kann vorgesehen sein, dass jedem Stützkopf, d.h. jedem Stützkopf und/oder jedem weiteren Stützkopf, ein mit dem jeweiligen Stützkopf gekoppeltes, insbesondere separates, beispielsweise separat ausgeführtes und separat betreibbares, Stellelement zugeordnet ist. Insbesondere bei derartigen Ausgestaltungen kann ein jeweiliges Stellelement so eingerichtet sein, dass der jeweils zugeordnete Stützkopf längs dessen Wirklinie, beispielsweise parallel zu dessen Wirklinie, bewegbar ist.

In Ausgestaltungen kann vorgesehen sein, dass zumindest ein Stellelement einer Stelleinheit als ein, beispielsweise manuell und/oder motorisch betreibbarer, Linearantrieb oder Lineartrieb ausgebildet ist. Der Lineartrieb kann beispielsweise als mechanisches, hydraulisches und/oder elektrisches Stellglied ausgebildet sein. Als ein mechanisches Stellglied kann z.B. eine Stellschraube vorhanden sein, mit einer parallel zur Wirklinie verlaufenden Gewindestange, die derart drehbar gelagert ist, dass der Stützkopf durch Drehung der Gewindestange parallel zur Wirklinie bewegt bzw. verstellt werden kann.

In Ausgestaltungen kann zumindest ein Stellelement, insbesondere alle Stellelemente, derart eingerichtet sein, dass der jeweils zugeordnete Stützkopf, insbesondere eine jeweilige Stützfläche, im Wesentlichen senkrecht zu einer Mantelfläche des Tragrahmens bewegbar ist.

In weiteren Ausgestaltungen kann die Stelleinheit an einem Längs- oder Querträger des Tragrahmens befestigt sein. Insbesondere bei solchen Ausgestaltungen kann vorgesehen sein, dass zumindest eine Stelleinheit so angeordnet und ausgebildet ist, dass diese ein jeweiliges Rahmenelement durchgreift. Umfasst das Stellelement beispielsweise eine Gewindestange, so kann diese in ein oder mehrere fluchtende Gewindebohrungen im oder am Tragrahmen eingreifen, wobei die Gewindebohrungen beispielsweise in Rahmenelementen, insbesondere Längs-, Quer, oder Tragstegen, des Tragrahmens vorhanden sein können.

In Ausgestaltungen der Montagevorrichtung kann vorgesehen sein, dass der Tragrahmen quaderförmig ausgebildet ist. Beispielsweise kann der Tragrahmen eine quaderförmige Rahmenstruktur mit Längs-, Quer- und Stützträgern umfassen. Der Tragrahmen kann in weiteren Ausgestaltungen von einer Unterseite des Tragrahmens vorspringende Stützfüße aufweisen.

Insbesondere in Ausgestaltungen mit Rahmenbauweise des Tragrahmens können die Stützeinheiten an einer oder mehreren quer, insbesondere senkrecht, zur Unterseite verlaufenden Lateralseiten und/oder an einer von der Unterseite abgewandten Oberseite des Tragrahmens angeordnet sein. Die Stützeinheiten können beispielsweise derart angeordnet sein, dass die jeweiligen Wirklinien im Wesentlichen senkrecht zur jeweiligen Lateralseite bzw. Oberseite ausgerichtet sind und/oder dass die Stützflächen parallel zur jeweiligen Lateral- oder Oberseite ausgerichtet sind.

In weiteren Ausgestaltungen kann vorgesehen sein, dass zwei der zumindest zwei Stützeinheiten mit quer zueinander verlaufenden Wirklinien der zugehörigen Stützköpfe, d.h. zwei Stützeinheiten deren Wirklinien quer zueinander verlaufen, unmittelbar zueinander benachbart angeordnet sind. Unter dem Begriff unmittelbar zueinander benachbart soll insbesondere verstanden werden, dass der senkrecht zu den Wirklinien gemessene Abstand zwischen den Stützeinheiten, d.h. ein Abstand zwischen den Mittelebenen bzw. Mittelachsen der Stützeinheiten, insbesondere der Stützköpfe, zwischen dem ein- bis zehn-fachen, insbesondere dem ein- bis drei-fachen, dem insbesondere zwei-fachen, Durchmesser der Stützköpfe, insbesondere der jeweiligen Stützfläche, gemessen senkrecht zur Wirklinie, beträgt. Auf diese Weise kann insbesondere lokal eine vergleichsweise gute Verbindung zwischen Tragrahmen und Innenwandung des Großraumbehälters, beispielsweise bei gleichzeitig geringer mechanischer Biegebelastung des Tragrahmens, erreicht werden.

In Ausgestaltungen der Erfindung, beispielsweise nach Anspruch 6 ist ein Großraumbehälter, insbesondere ein Standard- oder ISO-Container vorgesehen, welcher einen zumindest durch Seitenwände, Dach und Boden definierten Innenraum umfasst, und welcher eine in dessen Inneren aufgenommene Montagevorrichtung nach einer der hierin vorgeschlagenen erfindungsgemäßen Ausgestaltungen umfasst.

Der Tragrahmen der Montagevorrichtung kann durch die Abstützeinrichtung an zumindest einer Innenwandung der Seitenwände, des Dachs und/oder des Bodens des Großraumbehälters abgestützt sein.

Beispielsweise kann der Tragrahmen oder das Traggestell dadurch im Inneren des Großraumbehälters abgestützt sein, dass die Stützflächen, vorzugsweise sämtliche Stützflächen, der Stützköpfe an Innenwandungen oder Innenwände des Großraumbehälters, zumindest teilweise, angeschlagen sind, wobei voneinander abgewandte Stützflächen mit einander zugewandten Innenflächen des Großraumbehälgers verspannt sein können.

In Ausgestaltungen kann vorgesehen sein dass die Abstützeinrichtung mehrere Stützeinheiten umfasst, die derart am Tragrahmen angebracht sind, dass deren Stützköpfe an gegenüberliegenden Innenwandungen der Seitenwände, des Dachs und/oder des Bodens angeschlagen sind. In weiteren Ausgestaltungen können die Stützköpfe derart angeordnet und vorgesehen sein, dass jeweils zumindest zwei, insbesondere vier, Stützköpfe an die Innenwandung einer Seitenwand, des Dachs und/oder des Bodens angeschlagen sind.

In Ausgestaltungen kann vorgesehen sein, dass der Tragrahmen mittels Stützfüßen an der Innenwandung des Bodens abgestützt ist, und dass ein oder mehrere, insbesondere vier, Stützköpfe an die gegenüberliegende Innenwandung der Decke angeschlagen sind.

In Ausgestaltungen kann vorgesehen sein, dass eine Außenumfangskontur des Tragrahmens im Wesentlichen der durch Seitenwände, Boden und Dach definierten, insbesondere rechteckförmigen, Innenumfangskontur des Großraumbehälters entspricht. In Varianten kann vorgesehen sein, dass die Stützköpfe im Wesentlichen vollständig im Zwischenraum zwischen Mantelfläche des Tragrahmens und jeweiliger Innenwandung gelegen sind.

In weiteren Ausgestaltungen kann vorgesehen sein, dass zumindest eine der Seitenwände, das Dach und/oder der Boden eine Vielzahl von Sicken umfasst, die zum Behälteräußeren vorspringen, sich beispielsweise zwischen Boden und Decke bzw. zwischen zwei Seitenwandungen, erstrecken, und in einer Längsrichtung des Großraumbehälters, insbesondere in einer Längsrichtung einer Seitenwand, mit vorgegebenem ersten Abstand gleichmäßig zueinander beabstandet sind. Bei solchen Ausgestaltungen kann vorgesehen sein dass zumindest zwei, einer mit Sicken versehenen Seitenwand zugewandte Stützköpfe einen parallel zur Längsrichtung des Großraumbehälters, insbesondere der Seitenwand gemessenen zweiten Abstand aufweisen, der ein ganzzahliges Vielfaches des ersten Abstands beträgt, wobei unter dem Abstand zweier Stützköpfe insbesondere der Abstand ihrer Mittelebenen oder Mittelachsen verstanden werden soll. Durch entsprechend gewählte Abstände kann erreicht werden, dass Stützköpfe und Sicken nach Art eines Formschlusses ineinander eingreifen können, so dass quer zur Längsrichtung der Sicken ein verbesserter Halt des Tragrahmens sichergestellt werden kann.

In Ausgestaltungen kann ferner vorgesehen sein, dass die, insbesondere sämtliche, den mit Sicken versehenen Wänden des Großraumbehälters zugewandten Stützköpfe in Sicken eintauchen und an der jeweiligen Innenwandung angeschlagen sind.

In weiteren Ausgestaltungen kann vorgesehen sein, dass die Stützköpfe eine Außenkontur aufweisen, welche im Wesentlichen der Innenkontur der Sicken entspricht, d.h. dass die Stützköpfe und die Sicken zumindest teilweise zueinander komplementäre Formen und Geometrien aufweisen können, insbesondere derart, dass Stützköpfe und korrespondierende Sicken formschlüssig ineinander greifen können. Insbesondere kann ein Formschluss mit verbessertem Halt in Richtung quer zur Längsrichtung der Sicken erreicht werden. Beispielsweise kann erreicht werden, dass die zur Fixierung des Tragrahmens zwischen gegenüberliegenden Wände erforderlichen Spann- oder Druckkräfte, insbesondere die auf die Wände des Großraumbehälters nach außen wirkenden Spannoder Druckkräfte verringert werden können.

In Ausgestaltungen der Erfindung, beispielsweise nach Anspruch 10, kann eine mobile technische Anlage oder Vorrichtung vorgesehen sein, welcher einen Großraumbehälter nach einem der hierin beschriebenen Ausgestaltungen umfassen kann. Auf dem zugehörigen Tragrahmen kann eine technische Anlage, beispielsweise eine Anlage zur Beimengung eines Flokkulationsagens in ein Flüssig-Feststoff-Gemisch, montiert sein, und der Tragrahmen kann mittels der vorgesehenen Abstützeinrichtung an Innenwandungen des Großraumbehälters abgestützt sein.

Bei einer Anlage zur Beimengung eines Flokkulationsagens können Anschlussflansche von Zu- und/oder Ableitungen der Anlage über ein Adapterelement, insbesondere über einen Adapterrahmen, mit einer jeweiligen Wand, insbesondere, Seitenwand des Großraumbehälters verbunden sein.

Der Großraumbehälter mit montierter Flokkulationsanlage, kann im Rahmen der Erfindung auch als eine Vorrichtung zur Beimengung eines Flokkulationsagens in ein Flüssig-Feststoff-Gemisch verstanden werden.

Eine wie vorgeschlagen in einem mobilen Großraumbehälter montierte technische Anlage eignet sich insbesondere für mobile Anwendungen, wobei mittels der Montagevorrichtung ein sicherer Halt der Anlage, insbesondere während des Transports, gewährleistet werden kann.

Durch Verwendung der hierin vorgeschlagenen Montagevorrichtung ist es insbesondere möglich, die Anlage in austauschbarer Weise in einem Großraumbehälter, insbesondere einem sog. ISO-Container, zu montieren bzw. im Großraumbehälter vergleichsweise flexibel zu positionieren.

Die Erfindung wird nachstehend, auch hinsichtlich weiterer Merkmale und Vorteile, anhand eines beispielhaften Ausführungsbeispiels mit Bezugnahme auf die anhängenden Zeichnungen näher erläutert. Es zeigen:
- FIG. 1: eine perspektivische Darstellung einer Montagevorrichtung mit einer daran montierten Flokkulationsanlage;
- FIG. 2: eine perspektivische Ansicht eines Großraumbehälters mit darin aufgenommener Montagevorrichtung;
- FIG. 3: eine beispielhafte Ausgestaltung einer Stützeinheit der Montagevorrichtung; und
- FIG. 4: einen Ausschnitt eines Horizontalschnitts durch den Großraumbehälter.

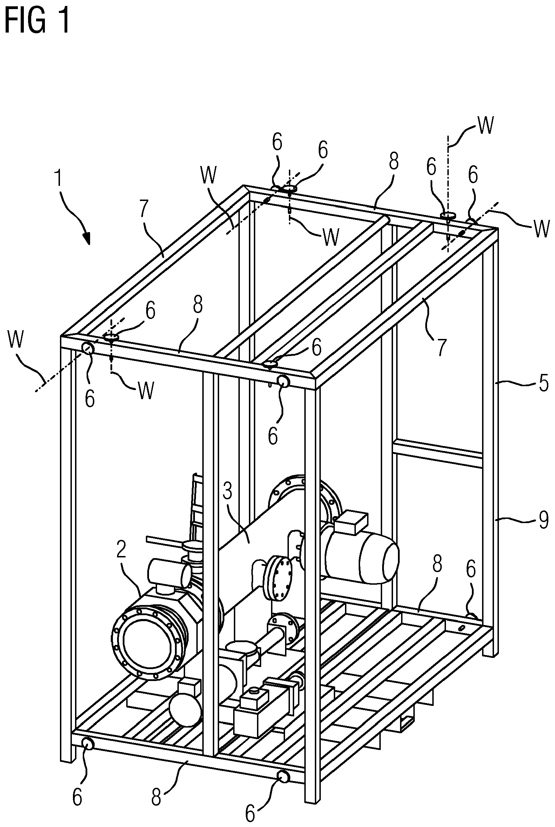

Einander entsprechende Teile und Komponenten in FIG 1 bis FIG. 4 sind mit den gleichen Bezugszeichen bezeichnet.

FIG. 1 zeigt eine Montagevorrichtung 1 zur Montage einer zur Beimengung eines Flokkulationsagens in ein Flüssig-Feststoff-Gemisch, beispielsweise Schlamm, eingerichtete technische Anlage 2.

Die technische Anlage 2 als solche umfasst eine Mischstrecke 3, vorliegend als Mischrohr ausgebildet, durch welche/s das Flüssig-Feststoff-Gemisch gepumpt werden kann. Bei Passage des Mischrohrs bzw. der Mischstrecke 3 kann dem Flüssig-Feststoff-Gemisch, beispielsweise Schlamm, ein Flokkulationsagens beigemengt oder beigemischt werden, durch welches eine Flokkulation der enthaltenen Feststoffanteile erreicht werden kann, so dass in darauffolgenden Verfahrensschritten eine Trennung von Feststoffen und Flüssiganteilen möglich ist bzw. wird.

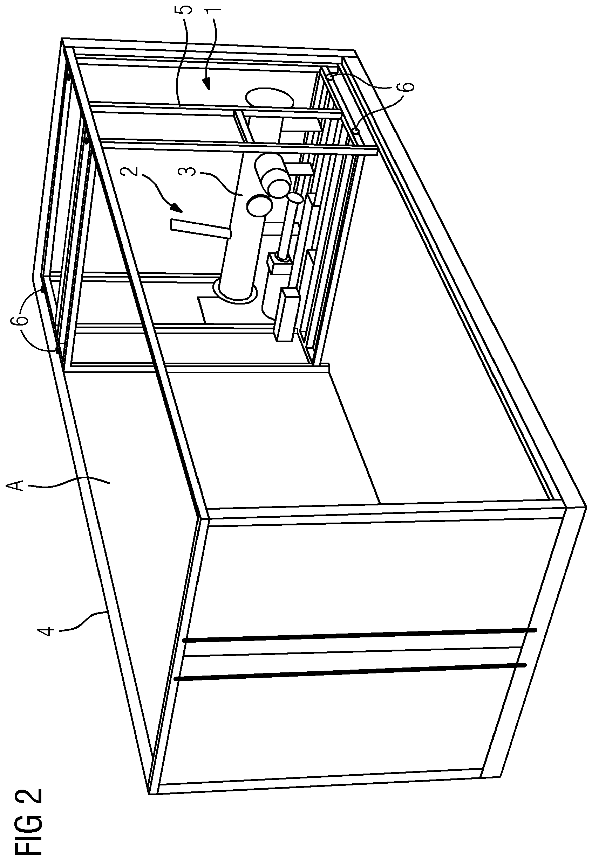

Die Montagevorrichtung 1 ist dazu ausgebildet und eingerichtet, wie in FIG. 2 gezeigt, in einem mobilen, d.h. transportablen, Großraumbehälter 4 montiert zu werden, und dient insoweit als Montagevorrichtung 1 für die Anlage 2 im Großraumbehälter 4.

Bei dem Großraumbehälter 4 der FIG. 2 handelt es sich im gezeigten Beispiel um einen Transportcontainer nach ISO-Norm, kurz um einen sog. ISO-Container.

Anhand des Montagerahmens 1 kann die Anlage 2 vergleichsweise flexibel im Inneren des Großraumbehälters 4 montiert werden, insbesondere derart, dass die Anlage 2 mitsamt des Montagerahmens 1 in vergleichsweise einfacher Weise aus dem Großraumbehälter 4 wieder und in diesem installiert werden kann.

Auch bietet der hier vorgeschlagene Montagerahmen 1, wie nachfolgend noch genauer beschrieben, den Vorteil, dass die Anlage im Großraumbehälter 4 in mechanisch vergleichsweise einfacher Weise fixiert werden kann. Insbesondere kann anhand des Montagerahmens 1 eine ausreichende Transportsicherung für die Anlage 2 im mobilen Großraumbehälter 4 erreicht werden.

Wie insbesondere aus FIG. 1 zu erkennen ist, umfasst der Montagerahmen 1 einen zur Befestigung der Anlage 2 ausgebildeten Tragrahmen 5. Am Tragrahmen 5 ist eine mit dem Tragrahmen 5 mechanisch gekoppelte Abstützeinrichtungen vorgesehen, welche mehrere Stützeinheiten 6 umfasst.

Der Tragrahmen 5 kann beispielsweise aus Hohlprofilelementen, insbesondere aus Metall, hergestellt sein, und, wie in den Figuren gezeigt, eine quaderförmige Struktur bzw. einen quaderförmigen Umriss mit mehreren Längsstreben 7, Querstreben 8, und mehreren Tragstreben 9 aufweisen. Ferner können zur Versteifung und/oder je nach Anforderungen und Abmessungen der jeweils zu montierenden Anlage 2 ein oder mehrere Zwischenstreben vorhanden sein.

Die Stützeinheiten 6 sind im gezeigten Beispiel an den Querstreben 8 befestigt, was insbesondere aus FIG. 1 ersichtlich ist. Die Stützeinheiten 6 können jedoch, z.B. je nach Bedarf, auch an anderen Stellen des Tragrahmens 5 angebracht sein.

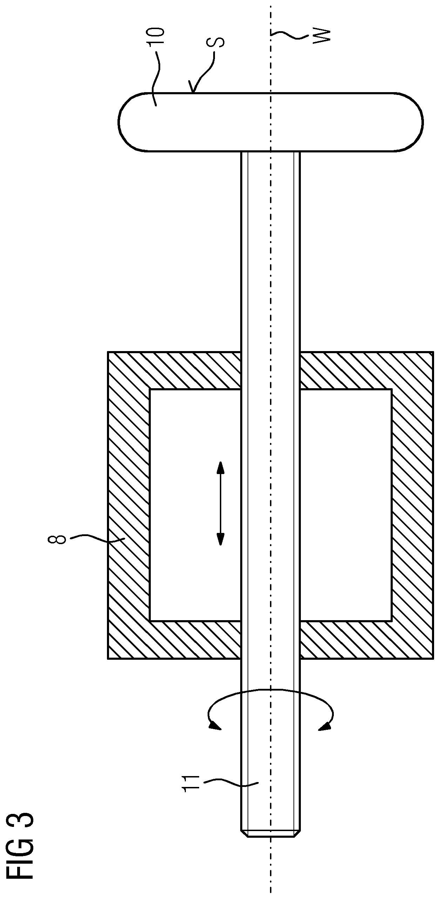

Wie insbesondere aus der Zusammenschau der FIG. 1 und FIG. 3 ersichtlich ist weist jede der Stützeinheiten 6 einen zur Abstützung gegen bzw. Anlage an eine Innenwandung A (siehe FIG. 2) des Großraumbehälters 4 eingerichteten, und relativ zum Tragrahmen 5 bewegbaren Stützkopf 10 auf. Der Stützkopf 10 ist mechanisch mit einer Stelleinheit 11 gekoppelt, welche im vorliegenden Beispiel als eine Stellschraube 11 ausgebildet ist.

Die Stellschraube 11 ist im vorliegenden Beispiel im Eingriff mit jeweils einem in eine der Querstreben 8 eingebrachten Gewindedurchgang umfassend zwei fluchtende Gewindebohrungen, so dass durch Drehung der Stellschraube 11 der jeweilige Stützkopf 10 parallel zur bzw. längs der Wirklinie W der Stelleinheit 11 bewegt bzw. positioniert werden kann.

Unter einer Wirklinie W soll insbesondere verstanden werden, dass die durch den jeweiligen Stützkopf 10 erzeugbaren Stützkräfte parallel zur Wirklinie W wirken, bzw. in einer parallel zur Wirklinie W verlaufenden Richtung orientiert sind, wobei die Richtung der Einleitung der durch den Stützkopf 10 erzeugten Stützkräfte in eine Wandung des Großraumbehälters quer zur jeweiligen Wirklinie W erfolgen kann. Im Beispiel der Figuren fällt die Wirklinie W mit der Längsachse der Stellschraube 11 zusammen, und verläuft bei allen Stützeinheiten 6 senkrecht zu einer Mantelfläche des Tragrahmens 5.

Wie insbesondere aus FIG. 1 ersichtlich ist, sind die Stützeinheiten 6 derart angeordnet und vorgesehen, dass die Abstützeinrichtung als solche mehrere Stützeinheiten 6 mit senkrecht zueinander verlaufenden Wirklinien W aufweist. Damit kann die Montagevorrichtung 1, insbesondere gegenüber äußeren Krafteinwirkungen beispielswiese beim Transport, sicher und fest im Großraumbehälter 4 installiert werden.

Wie ferner aus FIG. 1 ersichtlich ist, sind die Stützeinheiten 6 derart am Tragrahmen verteilt angeordnet, dass an jeder lateralen Seitenfläche des Tragrahmens 5 genau vier Stützeinheiten 6 vorhanden sind, und dass an der Oberseite des Tragrahmens 5 ebenfalls genau vier Stützeinheiten 6 vorhanden sind. Dadurch kann eine vergleichsweise sichere, und gegenüber z.B. beim Transport auftretenden Krafteinwirkungen zuverlässige Fixierung im Großraumbehälter 4 erreicht werden.

Bezüglich der lateralen Seitenflächen sind jeweils genau zwei der Stützeinheiten so angeordnet, dass deren Wirklinien W kollinear zueinander sind, wobei zur Anlage an die Innenwandung ausgebildete Stützflächen S der Stützköpfe 10 voneinander abgewandt ausgerichtet sind.

Durch geeignetes Drehen der Stellschrauben 11 kann der in Richtung der Wirklinien W gemessene Abstand zwischen voneinander abgewandten Stützflächen S verändert werden, wodurch die Abstützeinrichtung, und damit der der Tragrahmen 5 mit den Innenwandungen A des Großraumbehälters 4 in Eingriff gebracht werden kann, oder der Eingriff zwischen Stützköpfen 10 und den Innenwandungen A gelöst werden kann.

Im gezeigten Ausführungsbeispiel sind beide auf einer gemeinsamen Wirklinie W, kollinear zueinander angeordneten Stützköpfe 10 als entlang der Wirklinie W verstellbare Stützköpfe 10 ausgebildet. Jedoch ist es in Varianten auch möglich, dass einer der Stützköpfe starr ausgebildet ist, d.h. dass eine Stützeinheit einen in Wirkrichtung W verstellbaren Stützkopf 6 und einen zugeordneten weiteren, insbesondere starren, Stützkopf aufweist.

In weiteren Varianten können jeweils zwei oder mehr Stützköpfe mit voneinander abgewandten Stützflächen zu einer Stützeinheit zusammengefasst sein, wobei ein Teil oder alle der Stützköpfe einer Stützeinheit durch eine oder mehrere Stelleinheiten 11 längs der jeweiligen Wirklinie verstellbar ausgebildet sein können.

Die Anordnung und Anzahl der Stützeinheiten und Stützköpfe können im Rahmen der Erfindung variieren, und können an die jeweiligen Randbedingungen betreffend zu erwartende bzw. erforderliche Haltekräfte und Geometrien von Tragrahmen und/oder Großraumbehälter angepasst sein. Beispielsweise können an einer lateralen Seitenfläche genau zwei, drei, oder mehr als die in den Figuren gezeigten vier Stützeinheiten vorgesehen sein.

Die Stützköpfe 10 der Stützeinheiten 6 ragen bei der gezeigten Ausgestaltung über die Außenkontur des Tragrahmens 5 hinaus, jedoch ist es in Varianten auch möglich, dass die Stützeinheiten 6 derart angebracht sind, dass diese ggf. in der zurückgestellten Position innerhalb der Mantelfläche des Tragrahmens 5 gelegen sind.

Wie bereits erwähnt, sind in dem in den Figuren gezeigten Beispiel an der Oberseite des Tragrahmens 5 ebenfalls Stützeinheiten 6, in vorliegendem Beispiel genau vier Stützeinheiten 6, vorhanden. An der gegenüberliegenden Unterseite des Tragrahmens 5 weist dieser vier Stützfüße auf, durch welche der Tragrahmen 5 auf dem Boden des Großraumbehälters 4 abgestützt ist, wobei im montierten Zustand die Stützflächen S der oberen Stützköpfe 10 an der Innenseite des Dachs des Großraumbehälters 4 anliegen, und bei entsprechender Betätigung der Stelleinheit, d.h. der Stellschrauben 11, der Tragrahmen 5 zwischen Decke und Boden des Großraumbehälters 4 verspannt werden kann, bzw. die Stützköpfe 10 zur Anlage an die Innenwandung der Decke gebracht werden können.

Die Stützköpfe 10 des in den Figuren gezeigten Ausführungsbeispiels weisen eine oblate Form auf, wobei diese senkrecht zur jeweiligen Wirklinie W scheibenartig, insbesondere kreisscheibenartig, ausgebildet sind. In Varianten können die Stützköpfe 10 auch andere Geometrien aufweisen, und beispielsweise entsprechend der Kontur oder Form der jeweiligen Innenwandung ausgebildet sein.

Die Stützfläche S eines Stützkopfs 10 kann, wie in FIG. 3 schematisch gezeigt, im Wesentlichen eben ausgebildet sein. Möglich ist es hingegen auch, dass die Stützfläche eine konkave oder konvexe Form aufweist.

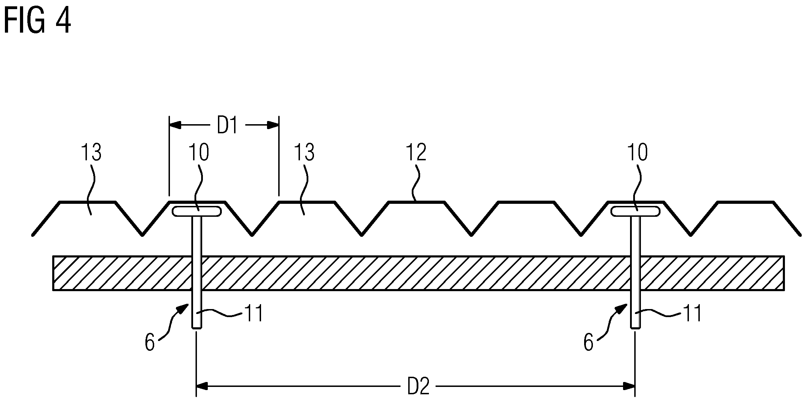

FIG. 4 zeigt einen Ausschnitt aus einem Horizontalschnitt durch den Großraumbehälter im Bereich der oberen oder unteren lateralen, an die seitliche Innenwandung A des Großraumbehälters 4 anliegenden oder angeschlagenen Stützeinheiten 6.

Wie aus FIG. 4 ersichtlich ist, kann der Großraumbehälter 4 in Ausgestaltungen insbesondere Seitenwände 12 aufweisen, welche jeweils eine Vielzahl von Sicken 13 umfasst, die in Richtung des Behälteräußeren vorspringen, und die sich, wie z.B. aus FIG. 2 ersichtlich ist, zwischen Boden und Decke des Großraumbehälters 4 erstrecken können.

In Längsrichtung der Seitenwand 12 sind die Sicken 13 mit einem vorgegebenem ersten Abstand D1 gleichmäßig zueinander beabstandet, und bilden so eine regelmäßige Abfolge von Erhöhungen und Vertiefungen.

Die der jeweiligen Innenwandung A zugewandten Stützeinheiten 6 bzw. Stützköpfe 10 weisen, gemessen parallel zur Längserstreckung der der Seitenwandung des Großraumbehälters 4, einen zweiten Abstand D2 auf, der ein ganzzahliges Vielfaches des ersten Abstands D1 beträgt. Der der Tragrahmen 5 kann auf diese Weise insbesondere derart angeordnet und positioniert werden, dass sämtliche einer mit Sicken 13 versehenen Seitenwand zugewandte Stützköpfe 10 in eine der Sicken 13 der Seitenwand eintauchen, und an der durch die Sicke 13 nach außen springenden Innenwandung A der jeweiligen Seitenwand angeschlagen werden können.

Indem die Stützköpfe 10 in die Sicken 13 eintauchen kann zusätzlich zu dem durch Anlage der Stützflächen S an die Innenwandung A erreichbaren Kraftund/oder Reibschluss ein Formschluss zwischen Stützköpfen 10 und Sicken 13 insbesondere in einer Richtung parallel zur Längserstreckung der Seitenwände, d.h. quer zur Längsrichtung der Sicken, erreicht werden.

Im Beispiel der Figuren weisen die Stützköpfe 10 eine Kreisscheibenartige Form auf. Möglich ist es jedoch auch, dass die Stützköpfe 10 in ihrer Form zumindest teilweise komplementär zur Form der Sicken 13 ausgebildet sind.

Insbesondere durch Verwendung der hierin vorgeschlagenen Montagevorrichtung mit Tragrahmen und zumindest zwei Stützeinheiten mit quer zueinander verlaufenden Wirklinien wird eine Möglichkeit geschaffen, mit welcher technische Anlagen in vergleichsweise einfacher Weise und dennoch sicher in einem mobilen Transportcontainer oder Großraumbehälter montiert werden können.

Insbesondere technische Anlagen für mobile Einsätze können so im Hinblick auf die bei einem Transport üblicherweise auftretenden Krafteinwirkungen und Beschleunigungen ausreichend fest in Inneren des Großraumbehälters montiert werden. Gleichzeitig ist es auch in vergleichsweise einfacher Weise möglich, die technischen Anlagen je nach Bedarf wieder aus einem Großraumbehälter zu entfernen.

Mithin zeigt sich, dass durch die hierin beschriebenen Montagevorrichtung das der Erfindung zu Grunde liegende Problem gelöst werden kann.

### Bezugszeichenliste

- 1: Montagevorrichtung
- 2: Anlage
- 3: Mischstrecke
- 4: Großraumbehälter
- 5: Tragrahmen
- 6: Stützeinheit
- 7: Längsstrebe
- 8: Querstrebe
- 9: Tragstrebe
- 10: Stützkopf
- 11: Stelleinheit, Stellschraube
- 12: Seitenwand
- 13: Sicke

- A: Innenwandung
- D1: erster Abstand
- D2: zweiter Abstand
- S: Stützfläche
- W: Wirklinie

## Patentansprüche

1. Montagevorrichtung (1), eingerichtet zur Montage einer technischen Anlage (2) in einem mobilen Standardcontainer (4), bei dem die Seitenwände (A) eine Vielzahl von Sicken (13) umfassen, die zum Behälteräußeren vorspringen, sich zwischen Boden und Decke erstrecken, und in einer Längsrichtung des Standardcontainers (4) mit vorgegebenem ersten Abstand (D1) gleichmäßig zueinander beabstandet sind, wobei die Montagevorrichtung (1) einen zur Befestigung der Anlage (2) ausgebildeten Tragrahmen (5) umfasst mit einer daran ausgebildeten und damit mechanisch gekoppelten Abstützeinrichtung (6, 10, 11) aufweisend mehrere Stützeinheiten (6), welche jeweils zumindest einen zur Abstützung gegen eine Innenwandung (A) des Standardcontainer (4) eingerichteten und relativ zum Tragrahmen (5) mittels einer Stelleinheit (11) längs einer jeweiligen Wirklinie (W) bewegbaren Stützkopf (10) aufweisen, wobei die Stützköpfe (10) derart ausgerichtet oder ausrichtbar angebracht sind, dass die Stützköpfe (10) mehrere Stützeinheiten (6) quer, bevorzugt senkrecht, zueinander verlaufende Wirklinien (W) aufweisen,
**dadurch gekennzeichnet, dass** zumindest zwei Stützköpfe (10), die im montierten Zustand einer Innenwandung (A) einer jeweiligen mit Sicken (13) versehenen Seitenwand (A) zugewandt sind, einen in Längsrichtung der Seitenwand (A) gemessenen zweiten Abstand (D2) aufweisen, der ein ganzzahliges Vielfaches des ersten Abstands (D1) beträgt, so dass der Tragrahmen (5) derart positionierbar ist, dass im montierten Zustand die der mit Sicken (13) versehenen Seitenwand (A) zugewandten zumindest zwei Stützköpfe (10) in jeweilige Sicken (13) der Seitenwand (A) eintauchen, und an der durch die Sicke (13) nach außen springenden Innenwandung (A) der jeweiligen Seitenwand (A) angeschlagen werden können.

2. Montagevorrichtung (1) nach Anspruch 1, wobei
zumindest eine der beiden Stützeinheiten (6) zumindest einen zur Abstützung an einer Innenwandung (A) des Standardcontainers (4) eingerichteten weiteren Stützkopf aufweist, welcher bevorzugt entgegengesetzt zum Stützkopf (10) der Stützeinheit (6) ausgerichtet ist, wobei optional
der Stützkopf (10) und der weitere Stützkopf an gegenüberliegenden Seiten des Tragrahmens (5) angeordnet sind, und/oder optional
der weitere Stützkopf durch die oder eine weitere Stelleinheit längs einer jeweiligen weiteren Wirklinie bewegbar ist, wobei optional die weitere Wirklinie parallel zur Wirklinie (W) des Stützkopfs (10) der Stützeinheit (6) ist, und wobei weiter optional die weitere Wirklinie und die Wirklinie (W) kollinear zueinander sind, wobei ferner optional
zu jedem weiteren Stützkopf genau einer der Stützköpfe (10) zugeordnet ist, deren Wirklinien (W) bevorzugt kollinear zueinander verlaufen, und/oder optional
der Stützkopf (10) eine scheibenartige, insbesondere kreisscheibenartige, Form aufweist.

3. Montagevorrichtung (1) nach einem der Ansprüche 1 oder 2, wobei
zumindest ein Stützkopf (10), und optional, wenn abhängig von Anspruch 2 zumindest ein weiterer Stützkopf, eine zur Anlage an die jeweilige Innenwandung (A) ausgebildete Stützfläche (S) umfasst, wobei optional
die Stützfläche (S) konvex oder konkav gekrümmt und/oder senkrecht zur jeweiligen Wirklinie (W) einen kreisförmigen Querschnitt aufweist, wobei optional
die Stützfläche (S) parallel zu einer Normalenebene der jeweiligen Wirklinie (W) bzw. weiteren Wirklinie ist, wobei,
wenn abhängig von Anspruch 2, optional die Stützflächen (S) des Stützkopfs (10) und des weiteren Stützkopfs voneinander abgewandt an gegenüberliegenden Seiten des Tragrahmens (5) gelegen sind, wobei optional
der Stützkopf (10), wenn abhängig von Anspruch 2 der weitere Stützkopf, insbesondere die Stützflächen (S), über die Mantelfläche des Tragrahmens (5) hinausragen, und weiter optional außerhalb der Mantelfläche angeordnet ist/sind.

4. Montagevorrichtung (1) nach einem der Ansprüche 1 bis 3, wobei
jedem Stützkopf (10) ein damit gekoppeltes, insbesondere separates, Stellelement (11) zugeordnet ist, wobei optional
ein jeweiliges Stellelement (11) so eingerichtet ist, dass der zugeordnete Stützkopf (10) längs dessen Wirklinie (W) bewegbar ist, wobei optional
zumindest ein Stellelement (11) als ein, insbesondere manuell und/oder motorisch betreibbarer, Linearantrieb (11) ausgebildet ist, wobei optional der Lineartrieb (11) als elektrisches, hydraulisches und/oder mechanisches Stellglied, insbesondere als eine Stellschraube (11), ausgebildet ist, wobei optional
zumindest ein Stellelement (11), vorzugsweise alle Stellelemente (11), derart eingerichtet ist/sind, dass der jeweils zugeordnete Stützkopf (10) im Wesentlichen senkrecht zu einer Mantelfläche des Tragrahmens (5) bewegbar ist, wobei optional
die Stelleinheit (11) an einem Längs- (7) oder Querträger (8) des Tragrahmens (5) befestigt ist und/oder die Stelleinheit (11) ein jeweiliges Rahmenelement (7, 8, 9) durchgreift.

5. Montagevorrichtung (1) nach einem der Ansprüche 1 bis 4, wobei
der Tragrahmen (5) quaderförmig ausgebildet ist, und/oder
der Tragrahmen (5) von einer Unterseite vorspringende Stützfüße aufweist, und/oder wobei
die Stützeinheiten (6) an einer oder mehreren quer, insbesondere senkrecht, zur einer oder der Unterseite verlaufenden Lateralseiten und/oder an einer Oberseite des Tragrahmens (5) angeordnet sind, optional derart, dass jeweilige Wirklinien (W) im Wesentlichen senkrecht zur jeweiligen Lateralseite bzw. Oberseite ausgerichtet sind, und/oder wobei
zwei der zumindest zwei Stützeinheiten (6) mit quer zueinander verlaufenden Wirklinien (W) der zugehörigen Stützköpfe (10) unmittelbar zueinander benachbart angeordnet sind.

6. Standardcontainer (4), umfassend einen zumindest durch Seitenwände, Dach und Boden definierten Innenraum, und einen im Inneren aufgenommene Montagevorrichtung (1) nach einem der Ansprüche 1 bis 7, wobei der Tragrahmen (5) der Montagevorrichtung (1) durch die zumindest zwei Stützköpfe der Abstützeinrichtung (6, 10, 11) an zumindest einer Innenwandung (A) der Seitenwände abgestützt ist, wobei die Seitenwände (A) eine Vielzahl von Sicken (13) umfassen, die zum Behälteräußeren vorspringen, sich zwischen Boden und Decke erstrecken, und in einer Längsrichtung des Großraumbehälters mit vorgegebenem ersten Abstand (D1) gleichmäßig zueinander beabstandet sind, und wobei die den mit Sicken (13) versehenen Seitenwänden zugewandten Stützköpfe (12) in jeweilige Sicken (13) eintauchen und an der Innenwandung (A) der jeweiligen Seitenwand (A) angeschlagen sind.

7. Standardcontainer (4) nach Anspruch 6, wobei die Abstützeinrichtung (6, 10, 11) mehrere Stützeinheiten (6) umfasst, die derart am Tragrahmen (5) angebracht sind,
dass deren Stützköpfe (10) an gegenüberliegenden Innenwandungen (A) der Seitenwände, des Dachs und/oder des Bodens angeschlagen sind, und/oder
dass jeweils zumindest zwei, insbesondere vier, Stützköpfe (10) an die Innenwandung (A) einer Seitenwand, des Dachs und/oder des Bodens angeschlagen sind und/oder
der Tragrahmen (5) mittels Stützfüßen an der Innenwandung des Bodens abgestützt ist, und ein oder mehrere Stützköpfe (6) an die gegenüberliegende Innenwandung der Decke angeschlagen sind.

8. Standardcontainer (4) nach Anspruch 6 oder 7, wobei eine Außenumfangskontur des Tragrahmens (5) im Wesentlichen der durch Seitenwände, Boden und Dach definierten, insbesondere rechteckförmigen, Innenumfangskontur des Großraumbehälters (4) entspricht, wobei optional die Stützköpfe (10) im Wesentlichen vollständig im Zwischenraum zwischen Mantelfläche des Tragrahmens (5) und jeweiliger Innenwandung (A) gelegen sind.

9. Standardcontainer (4) nach einem der Ansprüche 6 bis 8, wobei
eine Außenkontur der Stützköpfe (10) der Innenkontur der Sicken (13) angepasst ist.

10. Mobile technische Anlage (1, 2, 4) umfassend einen Großraumbehälter (4) nach einem der Ansprüche 6 bis 9, wobei auf dem Tragrahmen (5) der Montagevorrichtung (1) eine technische Anlage (2), insbesondere eine Anlage (2) zur Beimengung eines Flokkulationsagens in ein Flüssig-Feststoff-Gemisch, montiert ist, und wobei der Tragrahmen (5) mittels der Abstützeinrichtung (6, 10, 11) an Innenwandungen (A) des Großraumbehälters (4) abgestützt ist.

## Claims

1. A mounting device (1) that is configured for mounting a technical facility (2) in a mobile standard container (4), in which the side walls (A) include a plurality of corrugations (13) that project toward the container exterior, extend between the floor and the ceiling, and are uniformly spaced apart by a predefined first distance (D1) in a longitudinal direction of the standard container (4), wherein the mounting device (1) includes a support frame (5) that is designed for fastening the facility (2) to a support device (6, 10, 11) that is provided on the support frame and thus mechanically coupled thereto, and that has multiple support units (6) which in each case have at least one support head (10) that is configured for being supported against an inner wall (A) of the standard container (4) and movable relative to the support frame (5) along a respective line of action (W) by means of an adjustment unit (11), wherein the support heads (10) are oriented or orientably mounted in such a way that the support heads (10) [of] multiple support units (6) have lines of action (W) that extend transversely, preferably perpendicularly, with respect to one another,
**characterized in that**
at least two support heads (10), which in the mounted state of an inner wall (A) face a particular side wall (A) that is provided with corrugations (13), have a second distance (D2), measured in the longitudinal direction of the side wall (A), that is an integral multiple of the first distance (D1), so that the support frame (5) is positionable in such a way that in the mounted state, the at least two support heads (10) which face the side wall (A) provided with corrugations (13) sink into respective corrugations (13) of the side wall (A), and may be impinged on by the inner wall (A) of the particular side wall (A) that projects outwardly through the corrugation (13).

2. The mounting device (1) according to Claim 1, wherein
at least one of the two support units (6) has at least one further support head that is configured for being supported on an inner wall (A) of the standard container (4), and that is preferably oriented opposite from the support head (10) of the support unit (6), wherein optionally
the support head (10) and the further support head are situated on opposite sides of the support frame (5), and/or optionally
the further support head is movable by the, or a further, adjustment unit along a respective further line of action, wherein optionally the further line of action is parallel to the line of action (W) of the support head (10) of the support unit (6), and wherein optionally the further line of action and the line of action (W) are also collinear with one another, and optionally associated with each further support head is exactly one of the support heads (10), whose lines of action (W) preferably extend collinearly with respect to one another, and/or optionally
the support head (10) has a disk-like, in particular circular disk-like, shape.

3. The mounting device (1) according to one of Claims 1 or 2, wherein
at least one support head (10), and optionally, if dependent on Claim 2, at least one further support head, include(s) a support surface (S) that is designed for contact against the particular inner wall (A), wherein optionally the support surface (S) has a circular cross section that is convexly or concavely curved and/or perpendicular to the respective line of action (W), wherein optionally
the support surface (S) is parallel to a normal plane of the respective line of action (W) or further line of action, wherein
optionally, if dependent on Claim 2, the support surfaces (S) of the support head (10) and of the further support head face away from one another on opposite sides of the support frame (5), wherein optionally
the support head (10), and, if dependent on Claim 2, the further support head, in particular the support surfaces (S), protrude(s) beyond the circumferential surface of the support frame (5), and also is/are optionally situated outside the circumferential surface.

4. The mounting device (1) according to one of Claims 1 to 3, wherein
an in particular separate adjustment element (11) is associated with, and thus coupled to, each support head (10), wherein optionally
a respective adjustment element (11) is configured in such a way that the associated support head (10) is movable along its line of action (W), wherein optionally
at least one adjustment element (11) is designed as a linear drive (11) that is in particular operable in a manual and/or motorized manner, wherein the linear drive (11) is optionally designed as an electrical, hydraulic, and/or mechanical actuator, in particular as a set screw (11), wherein optionally at least one adjustment element (11), preferably all adjustment elements, (11), is/are configured in such a way that the respective associated support head (10) is movable essentially perpendicularly with respect to a circumferential surface of the support frame (5), wherein optionally the adjustment unit (11) is fastened to a side member (7) or cross member (8) of the support frame (5), and/or the adjustment unit (11) passes through a respective frame element (7, 8, 9).

5. The mounting device (1) according to one of Claims 1 to 4, wherein
the support frame (5) has a cuboidal design, and/or
the support frame (5) has support feet that protrude from a bottom side, and/or wherein
the support units (6) are situated on one or more lateral sides that extend transversely, in particular perpendicularly, with respect to a, or the, bottom side, and/or on a top side of the support frame (5), optionally in such a way that respective lines of action (W) are oriented essentially perpendicularly with respect to the respective lateral side or top side, and/or wherein two of the at least two support units (6) having lines of action (W) of the associated support heads (10) extending transversely with respect to one another are situated directly adjacent to one another.

6. A standard container (4), comprising an inner space that is defined at least by side walls, a roof, and a floor, and a mounting device (1) according to one of Claims 1 to 7 accommodated in the interior, wherein the support frame (5) of the mounting device (1) is supported on at least one inner wall (A) of the side walls by means of the at least two support heads of the support device (6, 10, 11), wherein the side walls (A) include a plurality of corrugations (13) that project toward the container exterior, extend between the floor and the ceiling, and are uniformly spaced apart by a predefined first distance (D1) in a longitudinal direction of the large container, and wherein the support heads (12) which face the side walls (A) provided with corrugations (13) sink into respective corrugations (13) and are impinged on at the inner wall (A) of the particular side wall (A).

7. The standard container (4) according to Claim 6, wherein the support device (6, 10, 11) includes multiple support units (6) that are mounted on the support frame (5) in such a way that
their support heads (10) are impinged on at oppositely situated inner walls (A) of the side walls, of the roof, and/or of the floor, and/or
in each case at least two, in particular four, support heads (10) are impinged on at the inner wall (A) of a side wall, of the roof, and/or of the floor, and/or the support frame (5) is supported on the inner wall of the floor by means of support feet, and one or more support heads (6) are impinged on at the oppositely situated inner wall of the ceiling.

8. The standard container (4) according to Claim 6 or 7, wherein an outer circumferential contour of the support frame (5) corresponds essentially to the in particular rectangular inner circumferential contour of the large container (4) defined by the side walls, the floor, and the roof, wherein the support heads (10) are optionally essentially completely situated in the space between the circumferential surface of the support frame (5) and the respective inner wall (A).

9. The standard container (4) according to one of Claims 6 to 8, wherein an outer contour of the support heads (10) is adapted to the inner contour of the corrugations (13).

10. A mobile technical facility (1, 2, 4) that includes a large container (4) according to one of Claims 6 to 9, wherein a technical facility (2), in particular a facility (2) for adding a flocculation agent to a liquid-solid mixture, is mounted on the support frame (5) of the mounting device (1), and wherein the support frame (5) is supported on inner walls (A) of the large container (4) by means of the support device (6, 10, 11).

## Revendications

1. Dispositif de montage (1), agencé pour le montage d'un équipement technique (2) dans un conteneur standard mobile (4), dans lequel les parois latérales (A) comprennent une pluralité de moulures (13) qui font saillie vers l'extérieur du conteneur, s'étendent entre le plancher et le plafond et sont espacées uniformément l'une de l'autre dans une direction longitudinale du conteneur standard (4) avec une première distance (D1) spécifiée, dans lequel le dispositif de montage (1) comprend un cadre porteur (5) réalisé pour fixer l'équipement (2), avec un dispositif d'appui (6, 10, 11) réalisé sur celui-ci et couplé mécaniquement à celui-ci, qui présente plusieurs unités d'appui (6) présentant respectivement au moins une tête d'appui (10) aménagée pour s'appuyer sur une paroi intérieure (A) du conteneur standard (4) et pouvant être déplacée par rapport au cadre porteur (5) au moyen d'une unité d'actionnement (11) le long d'une ligne active (W) respective, dans lequel les têtes d'appui (10) sont alignées ou installées de telle sorte que les têtes d'appui (10) de plusieurs unités d'appui (6) présentent des lignes actives (W) s'étendant transversalement, de préférence perpendiculairement les unes par rapport aux autres, **caractérisé en ce qu'**au moins deux têtes d'appui (10), tournées à l'état monté vers une paroi intérieure (A) d'une paroi latérale (A) respective munie de moulures (13), présentent une deuxième distance (D2), mesurée dans la direction longitudinale de la paroi latérale (A), qui est un multiple entier de la première distance (D1), de sorte que le cadre porteur (5) peut être positionné de telle sorte qu'à l'état monté, les au moins deux têtes d'appui (10), tournées vers la paroi latérale (A) munie de moulures, s'enfoncent dans des moulures (13) respectives de la paroi latérale (A) et peuvent être accrochées à la paroi intérieure (A), faisant saillie vers l'extérieur à travers la moulure (13), de la paroi latérale (A) respective.

2. Dispositif de montage (1) selon la revendication 1, dans lequel au moins l'une des deux unités d'appui (6) présente au moins une tête d'appui supplémentaire aménagée pour prendre appui sur une paroi intérieure (A) du conteneur standard (4) et étant de préférence orientée à l'opposé de la tête d'appui (10) de l'unité d'appui (6), dans lequel en option,
la tête d'appui (10) et la tête d'appui supplémentaire sont disposées sur des côtés opposés du cadre porteur (5), et/ou en option,
la tête d'appui supplémentaire peut être déplacée par une unité d'actionnement supplémentaire le long d'une ligne active supplémentaire respective, dans lequel en option, la ligne active supplémentaire est parallèle à la ligne active (W) de la tête d'appui (10) de l'unité d'appui (6), et dans lequel en outre en option, la ligne active supplémentaire et la ligne active (W) sont colinéaires l'une à l'autre, dans lequel en outre en option,
chaque tête d'appui supplémentaire se voit attribuer exactement l'une des têtes d'appui (10) dont les lignes actives (W) s'étendent de préférence de manière colinéaire les unes aux autres, et/ou en option la tête d'appui (10) présente une forme de type disque, en particulier de type disque circulaire.

3. Dispositif de montage (1) selon l'une des revendications 1 ou 2, dans lequel
au moins une tête d'appui (10), et en option, lorsqu'elle dépend de la revendication 2, au moins une tête d'appui supplémentaire, comprend/comprennent une surface d'appui (S) réalisée pour venir en butée contre la paroi intérieure (A) respective, dans lequel en option, la surface d'appui (S) présente une section transversale circulaire à courbure convexe ou concave et/ou perpendiculairement à la ligne active (W) respective, dans lequel en option,
la surface d'appui (S) est parallèle à un plan normal de la ligne active (W) respective ou de la ligne active supplémentaire, dans lequel, lorsqu'elle dépend de la revendication 2, en option, les surfaces d'appui (S) de la tête d'appui (10) et de la tête d'appui supplémentaire sont situées, en étant détournées l'une de l'autre, sur des côtés opposés du cadre porteur (5), dans lequel en option,
la tête d'appui (10), lorsqu'elle dépend de la revendication 2 la tête d'appui supplémentaire, en particulier les surfaces d'appui (S), dépasse(nt) de la surface d'enveloppe du cadre porteur (5), et est/sont en outre en option disposée(s) en dehors de la surface d'enveloppe.

4. Dispositif de montage (1) selon l'une quelconque des revendications 1 à 3, dans lequel
chaque tête d'appui (10) se voit attribuer un élément d'actionnement couplé (11), en particulier séparé, dans lequel en option,
un élément d'actionnement (11) respectif est aménagé de telle sorte que la tête d'appui (10) attribuée peut être déplacée le long de la ligne active (W) de celle-ci, dans lequel en option,
au moins un élément d'actionnement (11) est réalisé sous la forme d'un entraînement linéaire (11), en particulier à commande manuelle et/ou motorisée, dans lequel en option, l'entraînement linéaire (11) est réalisé sous la forme d'un actionneur électrique, hydraulique et/ou mécanique, dans lequel en option,
au moins un élément d'actionnement (11), de préférence tous les éléments d'actionnement (11), est/sont aménagé(s) de telle sorte que la tête d'appui (10) respectivement attribuée peut être déplacée de manière substantiellement verticale à une surface d'enveloppe du cadre porteur (5), dans lequel en option,
l'unité d'actionnement (11) est fixée à un longeron (7) ou à une traverse (8) du cadre porteur (5) et/ou un élément de cadre (7, 8, 9) respectif passe à travers l'unité d'actionnement (11).

5. Dispositif de montage (1) selon l'une quelconque des revendications 1 à 4, dans lequel
le cadre porteur (5) est réalisé en forme parallélépipédique, et/ou
le cadre porteur (5) présente des pieds d'appui faisant saillie à partir d'une face inférieure, et/ou dans lequel
les unités d'appui (6) sont disposées sur une ou plusieurs faces latérales s'étendant transversalement, en particulier perpendiculairement, à une ou à la face inférieure, et/ou sont disposées sur une face supérieure du cadre porteur (5), en option de telle sorte que les lignes actives (W) respectives sont alignées de manière substantiellement perpendiculaire à la face latérale respective ou à la face supérieure, et/ou dans lequel deux des au moins deux unités d'appui (6) sont disposées de manière directement adjacente, avec des lignes actives (W) des têtes d'appui (10) associées s'étendant transversalement l'une par rapport à l'autre.

6. Conteneur standard (4), comprenant un espace intérieur défini au moins par des parois latérales, un plafond et un plancher, et un dispositif de montage (1) selon l'une quelconque des revendications 1 à 7 logé dans celui-ci, dans lequel le cadre porteur (5) du dispositif de montage (1) prend appui sur les au moins deux têtes d'appui du dispositif d'appui (6, 10, 11) sur au moins une paroi intérieure (A) des parois latérales, dans lequel les parois latérales (A) comprennent une pluralité de moulures (13) qui font saillie vers l'extérieur du conteneur, s'étendent entre le plancher et le plafond, et sont espacées uniformément l'une de l'autre dans une direction longitudinale du conteneur à grand volume avec une première distance spécifiée (D1), et dans lequel têtes d'appui (12), tournées vers les parois latérales munies de moulures (13), s'enfoncent dans des moulures (13) respectives et sont accrochées à la paroi intérieure (A) de la paroi latérale (A) respective.

7. Conteneur standard (4) selon la revendication 6, dans lequel le dispositif d'appui (6, 10, 11) comprend plusieurs unités d'appui (6) installées sur le cadre porteur (5) de telle sorte
que leurs têtes d'appui (10) sont accrochées à des parois intérieures opposées (A) des parois latérales, du plafond et/ou du plancher, et/ou que respectivement au moins deux, en particulier quatre, têtes d'appui (10) sont accrochées à la paroi intérieure (A) d'une paroi latérale, du plafond et/ou du plancher et/ou
que le cadre porteur (5) prend appui sur la paroi intérieure du plancher au moyen de pieds d'appui, et une ou plusieurs têtes d'appui (6) sont accrochées à la paroi intérieure opposée du plafond.

8. Conteneur standard (4) selon la revendication 6 ou 7, dans lequel un contour circonférentiel extérieur du cadre porteur (5) correspond substantiellement au contour circonférentiel intérieur du conteneur à grand volume (4), défini par des parois latérales, un plancher et un plafond et en particulier rectangulaire, dans lequel en option, les têtes d'appui (10) sont situées substantiellement complètement dans l'espace entre la surface d'enveloppe du cadre porteur (5) et de la paroi intérieure respective (A).

9. Conteneur standard (4) selon l'une des revendications 6 à 8, dans lequel un contour extérieur des têtes d'appui (10) est adapté au contour intérieur des moulures (13).

10. Equipement technique mobile (1, 2, 4), comprenant un conteneur à grand volume (4) selon l'une des revendications 6 à 9, dans lequel, sur le cadre porteur (5) du dispositif de montage (1) est monté un équipement technique (2), en particulier un équipement (2) pour ajouter un agent de floculation à un mélange liquide/solide, et dans lequel le cadre porteur (5) prend appui sur des parois intérieures (A) du conteneur à grand volume (4) au moyen du dispositif d'appui (6, 10, 11).
